# EUROPÄISCHE PATENTSCHRIFT

(11) **EP 4 208 694 B1**
(45) Veröffentlichungstag und Bekanntmachung des Hinweises auf die Patenterteilung: **11.06.2025**
(21) Anmeldenummer: 21765614.9
(22) Anmeldetag: 16.08.2021
(51) Int. Cl.: G01F 15/063, G01K 1/16, G01F 1/58, G01K 1/14, G01K 17/18, G01K 13/02, G01K 1/143

(54) **MESSGERÄT**
MEASURING DEVICE
DISPOSITIF DE MESURE

(30) Priorität: 01.09.2020 DE 102020122803
(43) Veröffentlichungstag der Anmeldung: 12.07.2023
(73) Patentinhaber: Endress+Hauser Flowtec AG, 4153 Reinach (CH)
(72) Erfinder: WORRETH, Bruno, 68480 Kiffis (FR); ULMI, Sabrina, 4142 Münchenstein (CH); CHEVROLET, Jean-Claude, 4147 Aesch (CH); STEINER, Fabian, 5035 Unterentfelden (DE); TSCHUDIN, Beat, 4153 Reinach (CH)
(74) Vertreter: Endress + Hauser Group Services (Deutschland) AG+Co. KG
(86) Internationale Anmeldenummer: PCT/EP2021/072745
(87) Internationale Veröffentlichungsnummer: WO 2022/048901

(56) Entgegenhaltungen:
- EP-A1- 1 683 665
- DE-A1- 102007 005 670
- DE-A1- 102018 113 230
- FR-A3- 2 853 069

## Beschreibung

Die Erfindung betrifft ein Messgerät, insbesondere ein Messgerät mit einem zumindest teilweise mediumsberührenden Gehäuse.

In der Automatisierungstechnik, insbesondere in der Prozess-Automatisierungstechnik, werden vielfach Messgeräte eingesetzt, die zur Erfassung und/oder Beeinflussung von Prozessvariablen dienen. Zur Erfassung von Prozessvariablen dienen Sensoren, die beispielsweise in Füllstandsmessgeräten, Durchflussmessgeräten, Druck- und Temperaturmessgeräten, pH-Redoxpotentialmessgeräten, Leitfähigkeitsmessgeräten, usw. integriert sind, welche die entsprechenden Prozessvariablen Füllstand, Durchfluss, Druck, Temperatur, pH-Wert bzw. Leitfähigkeit erfassen. Zur Beeinflussung von Prozessvariablen dienen Aktoren, wie zum Beispiel Ventile oder Pumpen, über die der Durchfluss einer Flüssigkeit in einem Rohrleitungsabschnitt bzw. der Füllstand in einem Behälter geändert werden kann. Als Messgerät werden im Prinzip alle Geräte bezeichnet, die prozessnah eingesetzt werden und die prozessrelevante Informationen liefern oder verarbeiten. Im Zusammenhang mit der Erfindung werden unter Messgeräten also auch Remote I/Os, Funkadapter bzw. allgemein elektronische Messkomponenten verstanden, die auf der Feldebene angeordnet sind.

Ein Messgerät ist dabei insbesondere ausgewählt aus einer Gruppe bestehend aus Durchflussmessgeräten, Füllstandsmessgeräten, Druckmessgeräten, Temperaturmessgeräten, Grenzstandsmessgeräten und/oder Analysemessgeräten.

Durchflussmessgeräte sind insbesondere Coriolis-, Ultraschall-, Vortex-, thermische und/oder magnetisch induktive Durchflussmessgeräte.

Füllstandsmessgeräte sind insbesondere Mikrowellen-Füllstandsmessgeräte, Ultraschall-Füllstandsmessgeräte, zeitbereichsreflektometrische Füllstandsmessgeräte, radiometrische Füllstandsmessgeräte, kapazitive Füllstandsmessgeräte, induktive Füllstandsmessgeräte und/oder temperatursensitive Füllstandsmessgeräte.

Druckmessgeräte sind insbesondere Absolut-,Relativ- oder Differenzdruckgeräte.

Temperaturmessgeräte sind insbesondere Messgeräte mit Thermoelementen und/oder temperaturabhängigen Widerständen.

Grenzstandsmessgeräte sind insbesondere vibronische Grenzstandsmessgeräte, Ultraschall-Grenzstandsmessgeräte und/oder kapazitive Grenzstandsmessgeräte.

Analysemessgeräte sind insbesondere pH-Sensoren, Leitfähigkeitssensoren, Sauerstoff- und Aktivsauerstoffsensoren, (spektro)-photometrische Sensoren, und/oder ionenselektive Elektroden.

Es gibt eine Vielzahl an Anwendungen, bei denen die Überwachung einer Mediumstemperatur zur Prozessüberwachung von besonderem Interesse ist. Häufig auch in Verbindung mit weiteren zu überwachenden Prozessgrößen. Die DE 10 2012 109 308 A1 beispielsweise lehrt ein magnetisch-induktives Durchflussmessgerät zum Ermitteln einer Strömungsgeschwindigkeit und/oder eines Volumendurchflusses eines elektrisch leitfähigen Mediums, welches zusätzlich eine in einer Öffnung des Messrohres eingesetzte Anordnung aufweist, bestehend aus einer mediumsberührenden Füllstandsüberwachungselektrode und einem Temperatursensor. Dabei weist die Füllstandsüberwachungselektrode eine Sacklochbohrung auf, in welche der Temperatursensor eingesetzt ist. Eine derartige Lösung liefert zwar - zusätzlich zur Mediumstemperatur - weitere Prozessgrößen, jedoch ist diese sehr aufwendig und erfordert mindestens eine weitere Öffnung in dem Messrohr. Die DE 10 2007 005670 A1 offenbart ebenfalls ein magnetisch-induktives Durchflussmessgerät mit einem Temperatursensor zum Messen der Temperatur des durch den Durchflusskanal fließenden Mediums, welcher in oder an der Messelektrode angeordnet ist.

DE 10 2018 113230 A1 offenbart ein Taupunkt-Sensormodul, welches für die Montage an einer Scheibe eines Fahrzeuges vorgesehen ist. Das Sensormodul weist eine Leiterplatte auf mit einem federnden Vorsprung, auf dem ein Temperatursensor angeordnet ist. Der Temperatursensor ist über ein Wärmeleitelement in thermischen Kontakt mit der zu überwachenden Scheibe. Bei dem Wärmeleitelement handelt es sich um einen Einspressstift, der mit der Leiterplatte verbunden ist. Das Wärmeleitelement dient dazu, die Wärme von der Scheibe zu dem Temperatursensor zu leiten. Die Leiterplatte selbst ist zur Scheibe beabstandet und nicht in direktem Kontakt mit dieser.

EP 1 683 665 A1 offenbart - ebenfalls wie die DE 10 2018 113230 A1 - ein zusätzliches, federndes Kontaktierungselement, welches an der Leiterplatte angeordnet ist, in Kontakt mit der zu überwachenden Scheibe steht und dazu eingerichtet ist, die Wärme von der Scheibe zu einem Sensorelement 24 zu leiten. Die Leiterplatte selbst ist wiederum zur Scheibe beabstandet und - anders als in der DE 10 2018 113230 A1 - nicht flexible ausgebildet.

FR 2 853 069 A3 offenbart ein Vortex-Durchflussmessgerät, welches eine Keramikplatte mit einem in der Strömung positionierten Biegebalken aufweist. Auf dem Biegebalken selbst ist ein Temperatursensor zur Messung der Temperatur des strömenden Mediums angeordnet. Anders als in den zuvor beschriebenen Stand der Technik ist der Temperatursensor der FR 2 853 069 A3 selbst direkt dem zu überwachenden Medium ausgesetzt.Der Erfindung liegt die Aufgabe zugrunde eine alternative Lösung für Messgeräte bereitzustellen, mit der eine Ermittlung einer Mediumstemperatur durch eine Gehäusewandung hindurch ermöglicht wird.

Die Aufgabe wird gelöst durch das Messgerät nach Anspruch 1.
Das erfindungsgemäße Messgerät zum Bestimmen einer Prozessgröße eines Mediums umfasst:
- ein Gehäuse,
   wobei das Gehäuse einen, insbesondere metallischen Gehäusekörper umfasst,
   wobei der Gehäusekörper eine Innenfläche aufweist;
- eine Temperaturmessvorrichtung,
   wobei die Temperaturmessvorrichtung einen ersten Temperatursensor umfasst,
   wobei der erste Temperatursensor dazu eingerichtet ist, einen ersten Temperaturwert zu ermitteln,
   wobei die Temperaturmessvorrichtung eine Auswerteschaltung umfasst,
   wobei die Auswerteschaltung dazu eingerichtet ist, eine Mediumstemperatur in Abhängigkeit des ersten Temperaturwertes zu ermitteln;
- eine starre Leiterplatte,
   wobei die Leiterplatte eine federnd ausgebildete Leiterplattenkomponente aufweist,
   wobei der erste Temperatursensor an der Leiterplattenkomponente angeordnet ist,
   wobei die Leiterplattenkomponente zumindest teilweise die Innenfläche des Gehäusekörpers berührt,
   wobei die Leiterplattenkomponente einen Federkörper aufweist,
   wobei die Leiterplatte einen starren Leiterplattengrundkörper aufweist,
   wobei der Federkörper und der Leiterplattengrundkörper monolithisch ausgebildet sind,
   wobei der Federkörper zumindest teilweise vom Leiterplattengrundkörper hervorkragt,
   wobei der Federkörper eine Kontaktfläche aufweist,
   wobei der Federkörper eine Anbringfläche aufweist,
   wobei der erste Temperatursensor auf der Anbringfläche angeordnet ist,
   wobei der Federkörper die Innenfläche mit der Kontaktfläche berührt.

Eine starre Leiterplatte (Leiterkarte, Platine oder gedruckte Schaltung; Englisch printed circuit board, PCB) ist ein Träger für elektronische Bauteile. Sie dient der mechanischen Befestigung und elektrischen Verbindung. Leiterplatten bestehen aus elektrisch isolierendem Material mit daran haftenden Leiterbahnen. Als isolierendes Material wird häufig faserverstärkter Kunststoff eingesetzt. Die Leiterbahnen werden zumeist aus einer dünnen Schicht Kupfer geätzt. Die Elektronikbauteile werden auf Lötflächen oder in Lötaugen gelötet. So werden sie an diesen Stellen gleichzeitig mechanisch und elektrisch verbunden. Nahezu jedes elektronische Gerät enthält eine oder mehrere Leiterplatten, daher lässt sich das erfindungsgemäße Konzept in einer Vielzahl an unterschiedlichen Messgeräten einsetzen und somit einfach und günstig eine Temperaturmessvorrichtung in einem herkömmlichen Messgerät implementieren, ohne aufwendige Umgestaltungen vornehmen zu müssen. Starre Leiterplatten haben üblicherweise eine Mindestdicke von 0,5 Millimetern und bestehen häufig aus mehreren Leiterplattenlagen.

Flexible Leiterplatten - sogenannte Flex-Leiterplatten - unterscheiden sich von starren Leiterplatten im Wesentlichen durch eine vergleichsweise sehr geringe Materialstärke und durch eine dauerhafte Flexibilität, die es erlaubt dreidimensionale Strukturen zu bilden. Flex-Leiterplatten sind in der Regel biegbare Folienschaltungen auf Basis von Polyimid oder Polyester. Es sind weiterhin hybride Leiterplatten bekannt, die Bereiche aufweisen, welche flexibel ausgebildet sind. Derartige Leiterplatten sind unter dem Begriff Starrflex- und Semiflex-Leiterplatten bekannt. Starrflex-Leiterplatten bestehen aus mindestens zwei starren Leiterplatten bzw. starren Leiterplattenbereichen, die über eine flexible Leiterplatte bzw. einen flexiblen Leiterplattenbereich miteinander verbunden sind. So kann eine Polyimid-Folie auf oder zwischen herkömmlichen FR4-Schichten angeordnet sein. Semiflex-Leiterplatten bestehen aus mindestens einer Leiterplatte, die einen verjüngten Bereich aufweist, welcher derart verjüngt ist, dass eine Flexibilität der Leiterplatte erreicht wird. Dies wird in der Regel durch Abfräsen von Leiterplattenschichtstapeln bis auf wenige Lagen erreicht. Derartige Leiterplatten werden jedoch nur dann eingesetzt, wenn ein nicht dauerhaft flexibler Bereich benötigt wird. Die genannten Flex-Leiterplatten und hybriden Leiterplatten unterscheiden sich von starren Leiterplatten dadurch, dass sie zumindest abschnittsweise eine Materialstärke von kleiner 0,5 Millimetern aufweisen. Der Einsatz der federnd ausgebildeten Leiterplattenkomponente hat den Vorteil, dass sich Fertigungstoleranzen der Leiterplatte, aber auch des Gehäusekörpers - welche zusammengenommen durchaus bei ± 0,2 Millimeter liegen können - kompensieren lassen und somit sichergestellt werden kann, dass die Leiterplattenkomponente mit der Innenfläche des Gehäusekörpers in einem mechanischen Kontakt steht, bzw. diese berührt. Als Leiterplattenkomponenten eignen sich separate Komponenten, die sich bei Krafteinwirkung elastisch verformen. Ein Beispiel für geeignete Leiterplattenkomponenten sind Federkontakte - beispielsweise Abschirmungsfinger und Erdungsfedern - welche bekanntermaßen für elektrische Niederspannungsverbindungen sowie zur Erdung auf Leiterplatten eingesetzt werden, um durch elektrostatische Aufladung von z.B. Lautsprechern, Motoren oder Mikrofonen zu verhindern. Alternativ kann die Leiterplattenkomponente auch als Teil der Leiterplatte bzw. des Leiterplattenkörpers ausgebildet sein.

Temperatursensoren sind meist elektrische oder elektronische Bauelemente, die ein elektrisches Signal als Maß für die Temperatur liefern. Erfindungsgemäß eignen sich NTC-Thermistoren (engl. Negative Temperature Coefficient Thermistor), insbesondere als SMD Chip (Surface mounted Device) ausgebildete NTC-Thermistoren und vorzugsweise NTC-Thermistoren 0402 (1005 Metrik) für den Einsatz als erster Temperatursensor auf der Leiterplatte.

Abhängig von der Dimensionierung der Leiterplatte eignet sich für den ersten Temperatursensor und weitere Temperatursensoren der Einsatz eines PT100 und/oder PT1000 Widerstandsthermometers.

Unter dem Merkmal "federnd ausgebildet" ist im Kontext der Erfindung die Biegsamkeit bzw. die elastische Verformbarkeit der Leiterplattenkomponente zu verstehen. D.h. die Leiterplattenkomponente ändert unter Krafteinwirkung seine Form bzw. seine Auslenkung und bei Wegfall der einwirkenden Kraft kehrt die Leiterplattenkomponente in die Ursprungsform bzw. Ursprungsauslenkung zurück. Durch den mechanischen Kontakt zwischen Leiterplattenkomponente und Innenfläche des Gehäusekörpers wird ein thermischer Kontakt zwischen dem Gehäusekörper und dem auf der Leiterplattenkomponente angeordneten ersten Temperatursensor realisiert.

Leiterplatten lassen sich beispielsweise mittels einem spanenden Fertigungsverfahren bearbeiten, um somit der Leiterplatte einsatzbedingt eine individuelle Form zu geben oder um eine gewünschte Struktur aus dem Leiterplattengrundkörper zu erzeugen. Eine vorteilhafte Struktur ist eine vom starren Leiterplattengrundkörper getrennte Ausnehmung. Diese Struktur bildet die Leiterplattenkomponente und wird im Folgenden als Federkörper bezeichnet. Weiterhin zeichnen sich Leiterplatten in der Regel dadurch aus, dass sie bei Krafteinwirkung elastisch verbiegbar sind. Dadurch ist auch der Federkörper flexibel. Die mechanischen Eigenschaften, insbesondere die Federsteifigkeit des Federkörpers lassen sich mittels der Geometrie des Federkörpers beeinflussen.

Der Federkörper entspricht einem Cantilever bzw. einem Kragträger. Ein Kragträger ist in der technischen Mechanik ein einseitig gelagerter, oft waagerechter Balken, der an seinem freien Ende oder bis über seine ganze Länge quer belastet wird.

Vorteilhafte Ausgestaltung der Erfindung sind Gegenstand der Unteransprüche.

Eine Ausgestaltung sieht vor, dass der Federkörper zumindest in einer Leiterplattenebene elastisch verformbar, insbesondere elastisch verformt ist.

Der Leiterplattengrundkörper ist zumindest teilweise planar ausgebildet und weist eine Leiterplattenebene auf, welche auch durch den Federkörper verläuft. Auch der Federkörper ist planar ausgebildet. Auf den Federkörper wirkt im angeordneten Zustand der Leiterplatte vorzugsweise ausschließlich eine Kraftwirkung mit Richtungsvektor in der Leiterplattenebene. Somit wird eine Torsion des Federkörpers vermieden und nachteilige mechanische Spannungen in der Leiterplatte, insbesondere im Leiterplattengrundkörper reduziert.

Eine Ausgestaltung sieht vor, dass der Federkörper in Längsrichtung des Federkörpers eine Erstreckung mit einer Länge *L* aufweist,
wobei die Länge *L* einen Wert zwischen 5 und 20 Millimeter annimmt.

Aufgrund der intrinsischen mechanischen Eigenschaften, d.h. des E-Moduls der eingesetzten Leiterplatte, insbesondere bei der Verwendung einer Leiterplatte der Klasse FR-4 hat sich eine Länge *L* zwischen 5 und 20 Millimeter als vorteilhaft gegenüber davon abweichenden Dimensionierungen herausgestellt. FR-4 (flame retardant, dt. flammenhemmend) bezeichnet eine Klasse von schwer entflammbaren und flammenhemmenden Verbundwerkstoffen bestehend aus Epoxidharz und Glasfasergewebe. Zur Verbesserung der Flammhemmung wird der Verbundwerkstoff mit chemischen Stoffen wie polybromierte Diphenylether versetzt. Leiterplatten der Klasse FR-4 sind einer der meistgenutzten Leiterplatten.

Ist die Länge L größer als 20 Millimeter, so ist der Federkörper empfindlicher gegenüber externen Kräften und somit anfälliger für Beschädigungen. Ist die Länge *L* kleiner als 5 Millimeter, so ist die Steifigkeit des Federkörpers so groß, dass eine auf den Federkörper wirkende Kraft auf den Federkörpergrundkörper übertragen wird und dort zu Verformungen, insbesondere Verdrehungen führt. Dies ist besonders dann nachteilig, wenn elektrische Komponenten auf den Leiterplattengrundkörper angeordnet sind.
Eine Ausgestaltung sieht vor, dass die Länge *L* einen Wert zwischen 5 und 15 Millimeter, insbesondere zwischen 7 und 13 Millimeter und vorzugsweise zwischen 9 und 11 Millimeter annimmt.

Ein Vorteil der Ausgestaltung ist die einfachere Herstellbarkeit des Federkörpers.

Eine Ausgestaltung sieht vor, dass die Länge *L* einen Wert zwischen 10 und 20 Millimeter, insbesondere zwischen 12 und 18 Millimeter und vorzugsweise zwischen 14 und 16 Millimeter annimmt.

Ein Vorteil der Ausgestaltung ist die geringere mechanische Steifigkeit des Federkörpers und somit die geringere Kraftübertragung auf den Leiterplattengrundkörper. Somit verformt sich der Leiterplattengrundkörper weniger bei Krafteinwirkung auf den Federkörper. Dies minimiert die mechanische Spannung auf Lötverbindungen, Leiterbahnen oder andere Komponenten des Messgerätes, welche im mechanischen Kontakt mit dem Leiterplattenkörper stehen.

Eine Ausgestaltung sieht vor, dass der Federkörper eine Materialstärke *D_{FK}* aufweist,
wobei der Leiterplattengrundkörper eine Materialstärke *D_{GK}* aufweist,
wobei der Federkörper einen Federkörperteilbereich aufweist,
wobei zumindest im Federkörperteilbereich gilt, dass *D_{FK} < D_{GK}.*

Ein Vorteil der Ausgestaltung ist die zusätzliche Einstellbarkeit der Federsteifigkeit der Federkonstante über die Wahl der Dicke.

Eine alternative Ausgestaltung sieht vor, dass der Federkörper eine Materialstärke *D_{FK}* aufweist,
wobei der Leiterplattengrundkörper (39) eine Materialstärke *D_{GK}* aufweist,
wobei die Materialstärke *D_{FK}* über den gesamten Federkörper konstant ist,
wobei *D_{GK} = D_{FK}* gilt.

Eine Ausgestaltung sieht vor, dass für die Materialstärke *D_{FK}* und/oder die Materialstärke *D_{GK}* gilt, dass diese größer als 0,5 Millimeter ist.

Eine Ausgestaltung sieht vor, dass die Leiterplatte und die Leiterplattenkomponente derart ausgebildet ist, dass auf die Leiterplattenkomponente, insbesondere auf den Federkörper und bevorzugt auf die Kontaktfläche eine Kraft in Richtung des Leiterplattengrundkörpers, insbesondere ein Biegemoment wirkt.

Eine Ausgestaltung sieht vor, dass sich eine durch die Kontaktfläche verlaufende Kontaktflächenebene und die durch die Anbringfläche verlaufende Leiterplattenebene schneiden.

Eine Ausgestaltung sieht vor, dass die Kontaktfläche eine Metallschicht aufweist.

Ein Vorteil der Ausgestaltung ist eine Verbesserung der Wärmeübertragung von Gehäusekörper zum ersten Temperatursensor. Ein Metallisieren der Randflächen von Leiterplatten ist zwar bekannt, jedoch dient dies bisher nicht der Verbesserung der Wärmeübertragung. Dies ist insbesondere dann vorteilhaft, wenn der erste Temperatursensor nicht im direkten mechanischen Kontakt mit der Innenfläche des Gehäusekörpers steht.

Eine Ausgestaltung sieht vor, dass sich die Metallschicht ausgehend von der Kontaktfläche zumindest teilweise bis zu der Anbringfläche erstreckt,
wobei der erste Temperatursensor mindestens teilweise auf der Metallschicht angeordnet ist.

Eine derartige Ausgestaltung hat den Vorteil, dass die Wärme effektiv zum ersten Temperatursensor geleitet wird und der erste Temperatursensor somit schnell auf Temperaturänderungen im Medium reagieren kann.

Eine Ausgestaltung sieht vor, dass der erste Temperatursensor zumindest über einen elektrischen Leiter mit einer Messschaltung elektrisch verbunden ist,
wobei der Leiter als eine Leiterbahn ausgebildet ist,
wobei sich die Metallschicht zumindest teilweise auf den Leiter erstreckt.

Der elektrische Leiter kann zum Verbinden des ersten Temperatursensors mit einem Erdpotential eingerichtet sein.

Eine Ausgestaltung sieht vor, dass der Gehäusekörper einen ersten Gehäuseabschnitt und einen zweiten Gehäuseabschnitt aufweist,
wobei der Gehäusekörper in dem ersten Gehäuseabschnitt eines ersten Gehäusekörperdurchmesser aufweist,
wobei der Gehäusekörper in dem zweiten Gehäuseabschnitt einen zweiten Gehäusekörperdurchmesser aufweist,
wobei der erste Gehäuseabschnitt und der zweite Gehäuseabschnitt in Längsrichtung des Gehäusekörpers aufeinanderfolgen,
wobei der erste Gehäusekörperdurchmesser kleiner ist als der zweite Gehäusekörperdurchmesser,
wobei der erste Temperatursensor die Innenfläche des Gehäusekörpers im ersten Gehäuseabschnitt berührt.

Ein Vorteil der Ausgestaltung ist die höher Montagefreundlichkeit und die geringere Krafteinwirkung auf den Leiterplattengrundkörper über den Federkörper, beim Montieren der Leiterplatte ins Gehäuse. Erst beim Einführen des Federkörpers in den ersten Gehäuseabschnitt wird ein mechanischer Kontakt zwischen dem Federkörper und der Innenfläche des Gehäusekörpers gebildet und somit eine Kraft auf den Federkörper getätigt.

Im Falle einer metallisierten Kontaktfläche kommt es zudem zu einem geringeren Abrieb der Metallschicht beim Einführen der Leiterplatte. Insgesamt erfährt der Federkörper eine geringere mechanische Beanspruchung, wodurch die Beschädigungsanfälligkeit deutlich reduziert wird.

Eine Ausgestaltung sieht vor, dass die Leiterplatte mit Elektronikbauteilen bestückt ist,
wobei der Federkörper einen Federkörperbereich aufweist,
wobei sich die Elektronikbauteile insbesondere ausschließlich außerhalb des Federkörperbereiches befinden.

Ein Vorteil der Ausgestaltung ist die Vermeidung mechanischer Spannung auf die Elektronikbauteile, insbesondere auf die Lötstellen, über die sie mit mechanisch und elektrisch mit der Leiterplatte verbunden sind. Somit kommt es zu weniger Ausfällen von Elektronikbauteilen.

Eine Ausgestaltung sieht vor, dass die Leiterplatte nicht als Starr-Flex Leiterplatte, nicht als Semi-Flex Leiterplatte und nicht als Flex-Leiterplatte ausgebildet ist.

Eine Ausgestaltung sieht vor, dass das Messgerät umfasst:
- ein Messvorrichtung,
   wobei das Messvorrichtung eine Kontaktierungsvorrichtung aufweist,
   wobei die Kontaktierungsvorrichtung eine erste Kontaktierungskomponente und eine zweite Kontaktierungskomponente aufweist,
   wobei die erste Kontaktierungskomponente komplementär zur ersten Kontaktierungskomponente ausgebildet ist,
   wobei die erste Kontaktierungskomponente auf der Leiterplatte angeordnet ist;
- eine Messschaltung,
   wobei die Messschaltung durch die Elektronikbauteile gebildet ist,
   wobei die Messschaltung auf der Leiterplatte angeordnet ist,
   wobei die Messschaltung über die Kontaktierungsvorrichtung mit dem Messvorrichtung elektrisch verbunden ist.

Die Messvorrichtung kann beispielsweise geeignet sein, die Durchflussgeschwindigkeit, den Füllstand, den pH-Wert, die Trübung etc. eines Mediums zu bestimmen. Erfindungsgemäß wird die Messvorrichtung über die auf der Leiterplatte angeordnete erste Kontaktierungskomponente mit der Messschaltung elektrisch verbunden. Die erste Kontaktierungskomponente ist über eine Lötstelle mit der Leiterplatte verbunden. Um das Verbinden der ersten Kontaktierungskomponente mit der zweiten Kontaktierungskomponente zu vereinfachen und die mechanische Spannung auf die Kontaktierungsvorrichtung, insbesondere auf die Lötverbindung zu minimieren ist es besonders vorteilhaft, wenn der Federkörper federnd ausgebildet und flexibel in der Leiterplattenebene beweglich ist. Somit wird ein größerer räumlicher Spielraum beim Montieren der Leiterplatte und Kontaktieren der Messvorrichtung realisiert und trotzdem ein sicherer mechanischer Kontakt zwischen Federkörper und Innenfläche des Gehäusekörpers erzeugt.

Eine Ausgestaltung sieht vor, dass es sich bei dem Messgerät um eine magnetisch-induktive Durchflussmesssonde handelt.

Eine Ausgestaltung sieht vor, dass die Messvorrichtung eine Vorrichtung zum Erzeugen eines Magnetfeldes umfasst,
wobei die Vorrichtung zum Erzeugen des Magnetfeldes im Gehäuse, insbesondere koaxial zu einer Gehäusekörperachse angeordnet ist,
wobei die Leiterplatte mindestens einen Leiterplattenschenkel aufweist,
wobei sich der mindestens eine Leiterplattenschenkel zwischen der Vorrichtung zum Erzeugen des Magnetfeldes und der Innenfläche erstreckt,
wobei die erste Kontaktierungskomponente auf dem mindestens einen Leiterplattenschenkel angeordnet ist,
wobei das Messvorrichtung eine Vorrichtung zum Abgreifen einer induzierten Messspannung in einem fließfähigen Medium umfasst,
wobei eine Betriebsschaltung auf der Leiterplatte angeordnet ist,
wobei die Betriebsschaltung mit der Vorrichtung zum Erzeugen des Magnetfeldes elektrisch verbunden ist,
wobei die Betriebsschaltung durch die Elektronikbauteile gebildet ist.

- eine Messschaltung,
   wobei die Messschaltung über die Kontaktiervorrichtung mit der Vorrichtung zum Abgreifen der induzierten Messspannung elektrisch verbunden ist,
   wobei die Messschaltung durch die Elektronikbauteile gebildet ist.

Ein Vorteil der Ausgestaltung ist eine kompaktere Bauweise der magnetisch-induktiven Durchflussmesssonde und gleichzeitig die Bereitstellung einer weiteren Prozessgröße zur Überwachung des Mediums, ohne eine zusätzliche Öffnung - und somit potenzielle Leckagestelle - im Gehäuse.

Der mindestens eine Leiterplattenschenkel erstreckt sich in Richtung einer Frontseite des Gehäuses. Der Federkörper ist vorzugsweise mit dem mindestens einen Leiterplattenschenkel verbunden. Durch das Anordnen des Federkörpers und somit auch des ersten Temperatursensors möglichst nahe an der Frontseite des Gehäuses kann ein Verfälschen des ersten Temperaturwertes durch externe thermische Einflüsse minimiert werden.

Eine Ausgestaltung sieht vor, dass der Gehäusekörper eine Aufnahme für die Leiterplatte, insbesondere für einen Leiterplattenendabschnitt des mindestens einen Leiterplattenschenkels aufweist,
wobei die Leiterplatte zumindest teilweise in der Aufnahme angeordnet ist,
wobei die Aufnahme derart ausgebildet ist, dass sie eine Bewegung der Leiterplatte im Leiterplattenendabschnitt beim Auftreten von Verformungen der Leiterplatte minimiert.

Das Vorsehen einer Aufnahme für die Leiterplatte, insbesondere Leiterplattenschenkel hat den Vorteil, dass die mechanischen Kräfte auf die Lötstelle der Kontaktierungsvorrichtung minimiert wird. Aufgrund der elastischen Eigenschaften der Leiterplatte bzw. des Leiterplattenkörpers kann es zum Verbiegen des mindestens einen Leiterplattenschenkels beim Einführen kommen, was das mechanische Verbinden der ersten Kontaktierungskomponente mit der zweiten Kontaktierungskomponente unmöglich macht bzw. zumindest deutlich erschwert. Durch das Vorsehen von Aufnahmen, welche die Führung des Leiterplattenendabschnittes der Leiterplatte übernimmt, wird die Problematik behoben.

Eine Ausgestaltung sieht vor, dass die Temperaturmessvorrichtung einen zweiten Temperatursensor umfasst,
wobei der zweite Temperatursensor derart, insbesondere auf der Leiterplatte angeordnet ist, dass er in einem thermischen Kontakt mit der Vorrichtung zum Erzeugen des Magnetfeldes steht,
wobei der zweite Temperatursensor dazu eingerichtet ist, einen zweiten Temperaturwert zu ermitteln,
wobei die Auswerteschaltung dazu eingerichtet ist, eine korrigierte Mediumstemperatur in Abhängigkeit des ersten Temperaturwertes und des zweiten Temperaturwertes zu bestimmen.

Bei Gebrauch der Vorrichtung zum Erzeugen des Magnetfeldes wird ein erheblicher Teil der elektrischen Energie in Wärmeenergie umgewandelt. Dieser thermische Einfluss verfälscht die Messwerte des ersten Temperatursensors. Um jedoch ein kompaktes Messgerät bereitzustellen ist eine räumliche Nähe zwischen dem ersten Temperatursensor und der Vorrichtung zum Erzeugen des Magnetfeldes unvermeidbar. Das Vorsehen eines zweiten Temperatursensors, welcher im thermischen Kontakt mit der Vorrichtung zum Erzeugen des Magnetfeldes hat, den Vorteil, dass thermische Einflüsse der Vorrichtung zum Erzeugen des Magnetfeldes überwacht werden und notfalls in die Ermittlung einer korrigierten Mediumstemperatur eingehen können.

Eine Ausgestaltung sieht vor, dass die Vorrichtung zum Erzeugen des Magnetfeldes eine Spule umfasst,
wobei die Spule einen Spulendraht mit elektrisch isolierender Beschichtung umfasst,
wobei die Spule einen Schutzkörper aufweist, der dazu eingerichtet ist, den Spulendraht vor Beschädigungen durch eine Verformung des mindestens einen Leiterplattenschenkels zu schützen.

Beim Einführen der Leiterplatte kann es aufgrund der auf den Federkörper wirkende Kraft zu mechanischen Spannungen in dem bzw. zu Verformungen des mindestens einen Leiterplattenschenkels kommen. Dies kann zu einer Beschädigung der elektrisch isolierenden Beschichtung des Spulendrahtes und somit zum Ausfall der Vorrichtung zum Erzeugen des Magnetfeldes führen. Durch einen weiteren Schutzkörper kann die Krafteinwirkung auf den Spulendraht reduziert und eine Beschädigung verhindert werden.

Eine erfindungsgemäße Messstelle umfasst:
- ein erfindungsgemäßes Messgerät,
- eine Rohrleitung zum Führen eines fließfähigen Mediums oder einen Behälter zum Fassen des fließfähigen Mediums,
   wobei die Rohrleitung oder der Behälter eine Öffnung aufweist,
   wobei das Messgerät in die Öffnung eingesetzt ist.

Ein erfindungsgemäßes Verfahren zur Herstellung eines Messgerätes, insbesondere eines erfindungsgemäßen Messgerätes, umfasst die Verfahrensschritte:
- Bereitstellen eines Gehäuses mit einem insbesondere metallischen Gehäusekörpers, eines ersten Temperatursensors und einer starren Leiterplatte;
- Ausbilden eines hervorkragenden Federkörpers aus der Leiterplatte derart, dass der Federkörper federnd ausgebildet ist,
   wobei der Federkörper eine für den ersten Temperatursensor vorgesehene Anbringfläche aufweist;
- Anbringen des ersten Temperatursensors an die Anbringfläche des Federkörpers;
- Einführen der Leiterplatte in das Gehäuse in eine vorgesehene Position,
   wobei nach dem Anordnen der Leiterplatte der Federkörper den Temperatursensor gegen eine Innenfläche des Gehäuses drückt.

Das Ausbilden des hervorkragenden Federkörpers kann beispielsweise durch Fräsen erfolgen. Das Fräsen ist ein spanendes Fertigungsverfahren zur Herstellung von Werkstücken mit geometrisch bestimmter Gestalt, bei dem von einem Rohteil Material in Form von Spänen entfernt wird. Dabei ist es besonders vorteilhaft, wenn die elastischen Eigenschaften nicht durch das Verjüngen der Leiterplatte realisiert wird, sondern durch das Hervorkragen. In dem Fall weisen der Federkörper und die der Leiterplattenkörper die gleiche Materialstärke auf.

Da eine Leiterplatte elastische Eigenschaften hat, ist es vorteilhaft, wenn an Stelle einer zusätzlichen separaten Leiterplattenkomponente, ebendiese aus dem Leiterplattenkörper ausgeformt wird.

Vorteilhafte Ausgestaltung der Erfindung sind Gegenstand der Unteransprüche.

Eine Ausgestaltung sieht den Verfahrensschritt vor:
- Metallisieren einer Kontaktfläche des Federkörpers,
   wobei die Kontaktfläche nach dem Einführen der Leiterplatte in das Gehäuse in einem Kontakt mit der Innenfläche des Gehäusekörpers steht,
   wobei sich eine ausgebildete Metallschicht ausgehend von der Kontaktfläche bis zu der Anbringfläche erstreckt.

Das Metallisieren von Randflächen einer Leiterplatte für Anwendungen, in denen eine Verbesserung des EMV-Verhaltens durch Abschirmung des inneren Bereichs von Multilayern Leiterplatten notwendig ist, oder für Board on Board Verbindungen ist Stand der Technik. Die Metallschicht der vorliegenden Erfindung ist jedoch derart ausgebildet und dazu eingerichtet, dass die Wärme des Gehäusekörpers effektiv zum ersten Temperatursensor geführt wird.

Eine Ausgestaltung sieht vor, dass sich die Metallschicht zwischen Anbringfläche und ersten Temperatursensor erstreckt.

Eine Ausgestaltung sieht vor, dass sich die Metallschicht bis zu einer elektrischen Leiterbahn erstreckt,
wobei die Leiterbahn mit dem ersten Temperatursensor verbunden ist.

Eine Ausgestaltung sieht die Verfahrensschritte vor:
- Orientieren der Leiterplatte relativ zu einem eine Kontaktierungsvorrichtung aufweisenden Messvorrichtung,
   wobei der Gehäusekörper einen ersten Gehäuseabschnitt und einen zweiten Gehäuseabschnitt aufweist,
   wobei der Gehäusekörper in dem ersten Gehäuseabschnitt eines ersten Gehäusekörperdurchmesser aufweist,
   wobei der Gehäusekörper in dem zweiten Gehäuseabschnitt einen zweiten Gehäusekörperdurchmesser aufweist,
   wobei der erste Gehäuseabschnitt und der zweite Gehäuseabschnitt in Längsrichtung des Gehäusekörpers aufeinanderfolgen,
   wobei der erste Gehäusekörperdurchmesser kleiner ist als der zweite Gehäusekörperdurchmesser,
   wobei beim Orientieren der erste Temperatursensor im zweiten Gehäuseabschnitt angeordnet ist,
   wobei die Kontaktierungsvorrichtung eine erste Kontaktierungskomponente und eine komplementär zur ersten Kontaktierungskomponente ausgebildete zweite Kontaktierungskomponente aufweist,
   wobei die zweite Kontaktierungskomponente auf der Leiterplatte angeordnet ist;
- Bilden eines mechanischen und elektrischen Kontaktes zwischen der ersten Kontaktierungskomponente und der zweiten Kontaktierungskomponente,
   wobei beim Bilden des Kontaktes der erste Temperatursensor vom zweiten Gehäuseabschnitt in den ersten Gehäuseabschnitt bewegt wird,
   wobei der Federkörper im ersten Gehäuseabschnitt die Innenfläche des Gehäusekörpers berührt.

Eine Ausgestaltung sieht den Verfahrensschritt vor:
- Einbringen einer fließfähigen Vergussmasse und Aushärtenlassen der Vergussmasse;

Die Erfindung wird anhand der nachfolgenden Figuren näher erläutert. Es zeigt:
Fig. 1: einen Längsschnitt durch ein erfindungsgemäßes, als magnetisch-induktive Durchflussmesssonde ausgestaltetes Messgerät, welches in eine Messstelle eingesetzt ist;
Fig. 2: eine Schnittansicht durch eine weitere Ausgestaltung des Messgerätes;
Fig. 3: einen Längsschnitt durch ein weiteres, erfindungsgemäßes und als magnetisch-induktive Durchflussmesssonde ausgestaltetes Messgerät; und
Fig. 4: eine Nahansicht auf eine federnd ausgebildete Leiterplattenkomponente und die vorgesehen Leiterbahnen zum Kontaktieren des ersten Temperatursensors; und
Fig. 5: ein Flussdiagram zum Beschreiben der Verfahrensschritte zum Herstellen des erfindungsgemäßen Messgerätes.

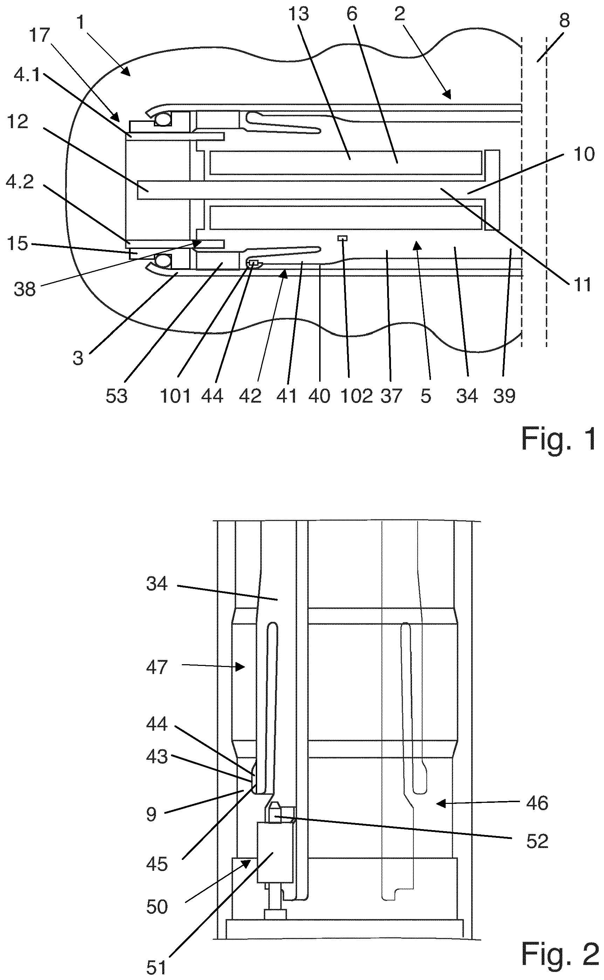

Die Fig. 1 zeigt einen Längsschnitt durch ein erfindungsgemäßes, als magnetisch-induktive Durchflussmesssonde 1 ausgestaltetes Messgerät, welches in eine Rohrleitung 8 eingesetzt ist. Die magnetisch-induktive Durchflussmesssonde 1 weist ein Gehäuse 2, welches einen metallischen Gehäusekörper 3 und einen stirnseitig angeordneten Frontkörper 15 aufweist. Der Frontkörper 15 weist ein elektrisch isolierendes Material auf bzw. ist aus einem elektrisch isolierenden Material gebildet. Im Frontkörper 15 ist ein Teil der Messvorrichtung angeordnet, in dem Fall eine Vorrichtung 17 zum Abgreifen einer induzierten Messspannung in einem fließenden Leitfähigen Medium, bestehend aus einer ersten Messelektrode 4.1 und einer zweiten Messelektrode 4.2. Die Vorrichtung 17 zum Abgreifen der induzierten Messspannung ist elektrisch mit einer Messschaltung verbunden, die dazu eingerichtet ist eine an der Vorrichtung 17 zum Abgreifen der induzierten Messspannung anliegende Spannung zu messen. Im Inneren des Gehäusekörpers 3 befindet sich eine Vorrichtung 5 zum Erzeugen eines Magnetfeldes. Die Vorrichtung 5 zum Erzeugen des Magnetfeldes umfasst eine Spulenanordnung 6 mit genau einer Spule 13, die mit einer Betriebsschaltung elektrisch verbunden ist, und einen Feldführungskörper 10, welcher einen sich durch eine Öffnung der Spule 13 bis zu einer Aufnahme im Frontkörper 15 erstreckenden Spulenkern 11 aufweist. Der Endabschnitt des Feldführungskörpers 10 ist als Polschuh 12 ausgebildet, der dazu dient das erzeugte Magnetfeld an der Stirnseite möglichst homogen in den Abschnitt zwischen der ersten Messelektrode 4.1 und der zweiten Messelektrode 4.2 einzuführen. Die Betriebsschaltung ist dazu eingerichtet an die Spule 13 ein Betriebssignal anzulegen, welches einen zeitlich veränderlichen Spannungs- oder Stromverlauf aufweist. Die Messschaltung und Betriebsschaltung sind aus Elektronikbauteilen gebildet, welche auf einer starren Leiterplatte 34 - d.h. mit einer Mindestdicke von 0,5 Millimeter, insbesondere 0,8 Millimeter und bevorzugt 1 Millimter - angeordnet sind. Die Leiterplatte 34 ist weiterhin dazu ausgebildet und eingerichtet die Vorrichtung 17 zum Abgreifen der induzierten Messspannung mit der Messschaltung und die Vorrichtung 5 zum Erzeugen des Magnetfeldes mit der Betriebsschaltung elektrisch zu verbinden. Die Leiterplatte 34 weist zwei Leiterplattenschenkel 37 auf, die sich jeweils ausgehend von einem Leiterplattengrundkörper 39 in einem durch Spule 13 und Innenfläche des Gehäusekörpers 3 gebildeten Raum in Richtung des Frontkörper 15 erstrecken. Im Leiterplattenschenkelendabschnitt 38 sind die Leiterplattenschenkel 37 mechanisch und elektrisch mit der ersten Messelektrode 4.1 und der zweiten Messelektrode 4.2 verbunden. Zudem befinden sich die Leiterplattenschenkel 37 im Leiterplattenschenkelendabschnitt 38 in einer Aufnahme 53, die dazu dient die Leiterplattenschenkel 37 beim Einführen zu Führe, so dass das Bilden der elektrischen und mechanischen Verbindung besonders benutzerfreundlich ist und die mechanische Spannung in der Leiterplatte minimal bleibt. Weiterhin weisen die Leiterplattenschenkel 37 jeweils eine Leiterplattenkomponente 40 auf, welche in der abgebildeten Ausgestaltung als mit dem Leiterplattenschenkel 37 monolithisch verbundene Federkörper 41 ausgebildet sind. Die Federkörper 41 kragen von der Leiterplatte 34, insbesondere in diesem Fall von den jeweiligen Leiterplattenschenkel 37 hervor und sind in einer Leiterplattenebene biegsam bzw. flexibel ausgebildet. Zudem berühren die Federkörper 41 die Innenfläche des Gehäusekörpers 3. Der Federkörper 41 weist einen Federkörperteilbereich 42 auf, in dem keine Elektronikbauteile angeordnet sind. Der Federkörper 41 kann im Federkörperteilbereich 42 erfindungsgemäß eine geringere Dicke aufweisen, als die Leiterplatte 34 bzw. der Leiterplattenschenkel 37. Mindestens einer der Federkörper 41 weist in Längsrichtung des Federkörpers 41 eine Erstreckung mit einer Länge *L* auf, wobei die Länge *L* einen Wert zwischen 5 und 20 Millimeter annimmt. Zudem weist mindestens ein Federkörper 41 quer zur Längsrichtung des Federkörpers 41 und in Richtung des Leiterplattengrundkörpers bzw. Leiterplattenschenkels 37 eine Erstreckung mit Länge *B* auf, wobei die Länge *B* bevorzugt größer als 1,2 Millimeter ist. Ein Teilabschnitt des mindestens einen Federkörpers 41 weist einen Abstand *X* zum Leiterplattengrundkörper aufweist, wobei der Abstand *X* mindestens 1,6 Millimeter groß ist. Die Federkörper 41 sind zumindest teilweise quaderförmig ausgebildet. An einem Frontabschnitt des mindestens einen Federkörpers 41 ist ein erster Temperatursensor 101 in Form eines NTC-Thermistoren angeordnet. Der erste Temperatursensor 101 ist über eine Leiterbahn mit der Messschaltung elektrisch verbunden. Weiterhin weist der Frontabschnitt des Federkörpers 41 eine Metallschicht 44 auf, die dazu eingerichtet ist die Wärme an der Innenfläche des Gehäusekörpers 3 zum ersten Temperatursensor 101 zu leiten, um somit Temperaturänderungen des Mediums schneller zu detektieren. Der erster Temperatursensor 101 ist Teil einer Temperaturmessvorrichtung, die gemäß der abgebildeten Ausgestaltung einen zweiten Temperatursensor 102 umfasst, welcher im thermischen Kontakt mit der Spule 13 steht und mit der Messschaltung elektrisch verbunden ist. Die Messschaltung ist dazu eingerichtet, anhand dem ersten Temperatursensor 101 eine von der Mediumstemperatur abhängige Messgröße zu bestimmen und mit dem zweite Temperatursensor 102 eine weitere Messgröße zu ermitteln. Eine Auswerteschaltung ist dazu eingerichtet, in Abhängigkeit von der von der Mediumstemperatur abhängigen Messgröße und der weiteren Messgröße eine korrigierte Mediumstemperatur zu ermitteln.

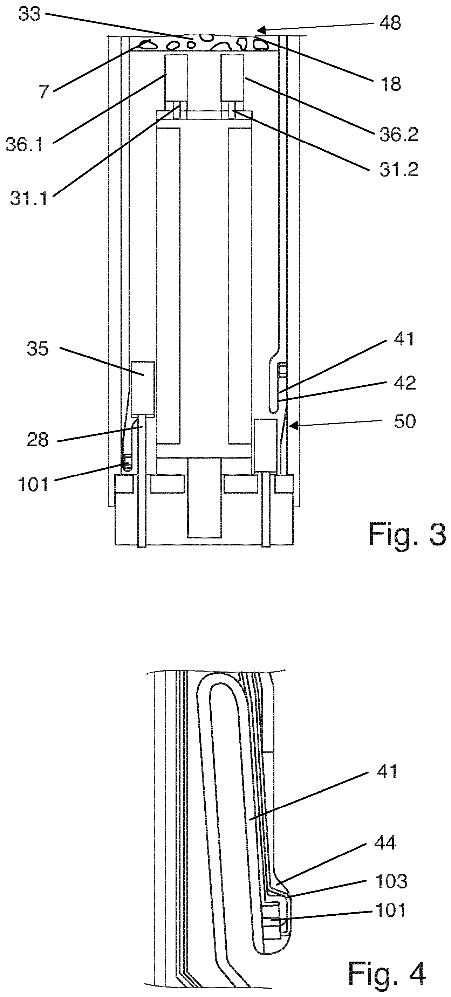

Die Fig. 2 zeigt einen Teilausschnitt einer Schnittansicht durch eine Ausgestaltung des erfindungsgemäßen Messgerätes. Der Gehäusekörper 3 weist einen ersten Gehäuseabschnitt 46 und einen zweiten Gehäuseabschnitt 47 auf, welche in Längsrichtung des Gehäusekörpers 3 aufeinanderfolgen. Der Gehäusekörper 3 weist in dem ersten Gehäuseabschnitt 46 einen ersten Gehäusekörperdurchmesser und in dem zweiten Gehäuseabschnitt 47 einen zweiten Gehäusekörperdurchmesser auf. Dabei ist der erste Gehäusekörperdurchmesser kleiner als der zweite Gehäusekörperdurchmesser. Der zweite Gehäuseabschnitt 47 dient dazu, während der Montage der Leiterplatte die Krafteinwirkung auf die Leiterplatte über den Federkörper 41 zu minimieren. Gleichzeitig wird der Abrieb der auf die Kontaktfläche 43 aufgebrachten Metallschicht 44 minimiert. Der Federkörper 41 berührt im finalen Einbauzustand zumindest stellenweise die Innenfläche 9 des Gehäusekörpers 3 im ersten Gehäuseabschnitt 46. Die in Kontakt mit der Innenfläche des Gehäusekörpers 3 stehende Fläche des Federkörpers wird als Kontaktfläche 43 bezeichnet und weist erfindungsgemäß eine Metallschicht 44 auf, die dazu dient den thermischen Kontakt zwischen ersten Temperatursensor und Gehäusekörper 3 zu verbessern. Der Federkörper 41 weist an einem Endabschnitt eine Anbringfläche 45 auf, auf welche der erste Temperatursensor (in Fig. 2 nicht abgebildet) angeordnet ist. Die Metallschicht 44 kann sich bis zu der Anbringfläche 45 erstrecken, wodurch ein besserer Wärmeübertrag von Gehäusekörper zum erster Temperatursensor realisiert wird. Die Fig. 2 zeigt weiterhin eine Messvorrichtung, die in einem Frontkörper angeordnet ist und eine Kontaktierungsvorrichtung 50 aufweist. Die Kontaktierungsvorrichtung 50 besteht aus einer erste Kontaktierungskomponente 51 und einer zweiten Kontaktierungskomponente 52, wobei die erste Kontaktierungskomponente 51 komplementär zur ersten Kontaktierungskomponente 52 ausgebildet ist und auf der Leiterplatte 34, insbesondere auf einem aus einem Leiterplattengrundkörper kragenden Leiterplattenschenkel angeordnet ist. Eine Messschaltung (nicht in Fig. 2 abgebildet, jedoch in Fig. 3) ist aus Elektronikbauteile gebildet, die auf der Leiterplatte 34 angeordnet sind und elektrisch über die Kontaktierungsvorrichtung 50 mit der Messvorrichtung elektrisch verbunden ist.

Die Fig. 3 zeigt einen Längsschnitt durch ein weiteres, erfindungsgemäßes und als magnetisch-induktive Durchflussmesssonde ausgestaltetes Messgerät. Das Messgerät weist in einem Gehäuseinneren eine Leiterplatte 34 auf, die mit Elektronikbauteilen 48 bestückt ist. Diese Elektronikbauteilen 48 bilden zum einen die Betriebsschaltung, die Messschaltung und die Auswerteschaltung 18, welche dazu eingerichtet ist einen Messwerte einer Prozessgröße in Abhängigkeit eines Messignales der Messvorrichtung zu bestimmen. Die Messvorrichtung weist Messelektroden auf, die jeweils Messelektrodenkontaktierungselemente 28 aufweisen, über die sie mit an der Leiterplatte angeordnete Messelektrodengegenkontaktierungselemente 35 mit der Messschaltung trennbar verbindbar sind. Die Messvorrichtung weist zudem eine Spule auf, die ein erstes Spulenkontaktierungselement 31.1 und ein zweites Spulenkontaktierungselement 31.2 umfasst, über die mit Hilfe von auf der Leiterplatte angeordnete Spulengegenkontaktierungsselemente 36.1, 36.2 eine trennbare, elektrische Verbindung mit der Betriebsschaltung erstellbar ist. Die Leiterplatte weist zwei kragend ausgebildete Federkörper 41 auf, die jeweils einen Federkörperbereich 42 aufweisen. Die Federkörper 41 erstrecken sich ausgehend vom Leiterplattenkörper in entgegensetzte Richtungen und berühren jeweils die Innenfläche des Gehäusekörpers. Der Federkörper 41 mit einer Erstreckung in Richtung des Frontkörpers weist in einem Federkörperendabschnitt einen ersten Temperatursensor 101 auf. Somit wird eine genaue Temperaturmessung des Mediums nahe an der Messvorrichtung ermöglicht. Der Federkörper 41 mit einer Erstreckung entgegengesetzt zur Richtung des Frontkörpers weist in einem Federkörperendabschnitt einen weiteren Temperatursensor auf. Eine derartige Ausgestaltung weist den Vorteil auf, dass die Häufigkeit des Abbrechens des Federkörpers beim Einführen der Leiterplatte minimiert wird. Die Elektronikbauteile 48 sind ausschließlich außerhalb des Federkörperbereiches 42 angeordnet um somit die mechanische Spannung auf die Lötstellen zu minimieren. Die zwei Messelektrodengegenkontaktierungselemente 35 sind in Längsrichtung des Gehäusekörpers versetzt zueinander angeordnet. Ebenfalls ist einer der Temperatursensoren 101 in Längsrichtung zwischen Messelektrodengegenkontaktierungselement 35 und Frontkörper angeordnet um somit den Temperatursensor möglichst weit weg von thermischen Störeinflüssen anzuordnen. Die Kontakte sind in Längsrichtung des Gehäuses versetzt angeordnet.

Die Fig. 4 zeigt eine Nahansicht auf eine federnd ausgebildete Leiterplattenkomponente in Form einer aus dem Leiterplattenkörper ausgebildeten Federkörpers 41 und die vorgesehen Leiterbahnen 103 zum Kontaktieren des ersten Temperatursensors 101. Der Federkörper 41 weist eine Kontaktfläche auf, durch welche eine Kontaktflächenebene verläuft, die senkrecht zur Leiterplattenebene orientiert ist. Diese Kontaktfläche dient dazu in einen mechanischen Kontakt mit der Innenfläche des Gehäusekörpers versetzt zu werden. Diese Kontaktfläche weist eine Metallschicht auf, die im eingebauten Zustand der Leiterplatte die Innenfläche des Gehäusekörpers berührt. Der Federkörper 41 weist eine Anbringfläche auf, auf die der erste Temperatursensor 101 anzuordnen ist. Die Metallschicht 44 erstreckt sich ausgehend von der Kontaktfläche zumindest teilweise bis zu der Anbringfläche. Somit wird eine gute thermische Verbindung zwischen Innenfläche des Gehäusekörpers und dem ersten Temperatursensor 101 erzeugt. Weiterhin ist der erste Temperatursensor 101 zumindest über eine elektrischen Leiterbahn 103 mit einer Messschaltung elektrisch verbunden. In der abgebildeten Ausgestaltung erstreckt sich die Metallschicht 44 zumindest teilweise bis auf die Leiterbahn 103.

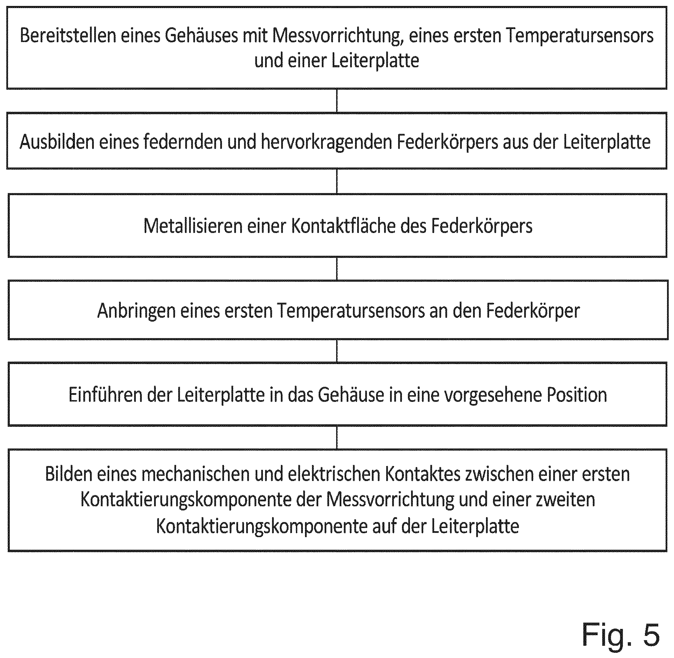

Die Fig. 5 zeigt eine ein Flussdiagram zum Beschreiben einzelner Verfahrensschritte, welche in einem Herstellverfahren für das erfindungsgemäße Messgerätes notwendig sind:
- Bereitstellen eines Gehäuses mit einem insbesondere metallischen Gehäusekörpers, eines ersten Temperatursensors und einer Leiterplatte;

Die Leiterplatte umfasst einen Leiterplattenkörper und auf diesen Elektronikbauteile. Zudem weist die Leiterplatte eine Lötstelle auf, auf welche ein erster Temperatursensor anzuordnen ist. Die Lötstelle ist über Leiterbahnen mit einer aus den Elektronikbauteilen gebildete Messschaltung elektrisch Verbunden und die Messschaltung dazu ausgebildet eine mediumstemperaturabhängiges Messsignal mittels des ersten Temperatursensors zu bestimmen.
- Ausbilden eines hervorkragenden Federkörpers aus der Leiterplatte derart, dass der Federkörper federnd ausgebildet ist;
- Metallisieren einer Kontaktfläche des Federkörpers,
   wobei sich eine ausgebildete Metallschicht ausgehend von der Kontaktfläche bis zu der Anbringfläche für den ersten Temperatursensor erstreckt.
- Anbringen des ersten Temperatursensors an eine auf den Federkörper vorgesehene Anbringfläche, insbesondere auf die vorgesehene Lötstelle;
- Einführen der Leiterplatte in das Gehäuse in eine vorgesehene Position,
   wobei beim Einführen der Federkörper gegen eine Innenfläche des Gehäuses gedrückt wird;
- Bilden eines mechanischen und elektrischen Kontaktes zwischen der ersten Kontaktierungskomponente einer Messvorrichtung und der zweiten Kontaktierungskomponente auf der Leiterplatte.

Das Herstellverfahren kann weitere Verfahrensschritte umfassen, die notwendig sind zum Bilden des Messgerätes, jedoch nicht Teil des erfindungsgemäßen Kerngedankens sind.

### Bezugszeichenliste

magnetisch-induktive Durchflussmesssonde 1
Gehäuse 2
Gehäusekörper 3
Messelektrode 4
Vorrichtung 5 zum Erzeugen des Magnetfeldes
Spulenanordnung 6
Betriebsschaltung 7
Rohrleitung 8
Innenfläche 9
Feldführungskörper 10
Spulenkern 11
Polschuh 12
Spule 13
Frontkörper 15
Vorrichtung 17 zum Abgreifen der induzierten Messspannung
Auswerteschaltung 18
Messelektrodenkontaktierungselement 28
Spulenkontaktierungselemente 31
Messschaltung 33
Leiterplatte 34
Messelektrodengegenkontaktierungselemente 35
Spulengegenkontaktierungselemente 36
Leiterplattenschenkel 37
Leiterplattenschenkelendabschnitt 38
Leiterplattengrundkörper 39
Leiterplattenkomponente 40
Federkörper 41
Federkörperbereich 42
Kontaktfläche 43
Metallschicht 44
Anbringfläche 45
erster Gehäuseabschnitt 46
zweiter Gehäuseabschnitt 47
Elektronikbauteilen 48
Kontaktierungsvorrichtung 50
erste Kontaktierungskomponente 51
zweite Kontaktierungskomponente 52
Aufnahme 53
Leiterplattenendabschnitt 54
Schutzkörper 55
erster Temperatursensor 101
zweiter Temperatursensor 102
Leiterbahn 103

## Patentansprüche

1. Messgerät zum Bestimmen einer Prozessgröße eines Mediums, umfassend:
- ein Gehäuse (2),
wobei das Gehäuse (2) einen, insbesondere metallischen Gehäusekörper (3) umfasst,
wobei der Gehäusekörper (3) eine Innenfläche (9) aufweist;
- eine Temperaturmessvorrichtung,
wobei die Temperaturmessvorrichtung einen ersten Temperatursensor (101) umfasst,
wobei der erste Temperatursensor (101) dazu eingerichtet ist, einen ersten Temperaturwert zu ermitteln,
wobei die Temperaturmessvorrichtung eine Auswerteschaltung (18) umfasst,
wobei die Auswerteschaltung (18) dazu eingerichtet ist, eine Mediumstemperatur in Abhängigkeit des ersten Temperaturwertes zu ermitteln;
- eine starre Leiterplatte (34),
wobei die Leiterplatte (34) eine federnd ausgebildete Leiterplattenkomponente (40) aufweist,
wobei der erste Temperatursensor (101) an der Leiterplattenkomponente (40) angeordnet ist,
wobei die Leiterplattenkomponente (40) zumindest teilweise die Innenfläche (9) des Gehäusekörpers (3) berührt.
wobei die Leiterplattenkomponente (40) einen Federkörper (41) aufweist,
wobei die Leiterplatte (34) einen starren Leiterplattengrundkörper (39) aufweist,
wobei der Federkörper (41) und der Leiterplattengrundkörper (39) monolithisch ausgebildet sind,
wobei der Federkörper (41) zumindest teilweise vom Leiterplattengrundkörper (39) hervorkragt,
wobei der Federkörper (41) eine Kontaktfläche (43) aufweist,
wobei der Federkörper (41) eine Anbringfläche (45) aufweist,
wobei der erste Temperatursensor (101) auf der Anbringfläche (45) angeordnet ist,
wobei der Federkörper (41) die Innenfläche (9) mit der Kontaktfläche (43) berührt.

2. Messgerät nach Anspruch 1,
wobei der Federkörper (41) zumindest in einer Leiterplattenebene elastisch verformbar, insbesondere verformt ist.

3. Messgerät nach mindestens einem der Ansprüche 1 bis 2,
wobei der Federkörper (41) in Längsrichtung des Federkörpers (41) eine Erstreckung mit einer Länge *L* aufweist,
wobei die Länge *L* einen Wert zwischen 5 und 20 Millimeter annimmt.

4. Messgerät nach Anspruch 3,
wobei die Länge *L* einen Wert zwischen 5 und 15 Millimeter, insbesondere zwischen 7 und 13 Millimeter und vorzugsweise zwischen 9 und 11 Millimeter annimmt.

5. Messgerät nach Anspruch 3,
wobei die Länge *L* einen Wert zwischen 10 und 20 Millimeter, insbesondere zwischen 12 und 18 Millimeter und vorzugsweise zwischen 14 und 16 Millimeter annimmt.

6. Messgerät nach mindestens einem der vorherigen Ansprüche,
wobei der Federkörper (41) eine Materialstärke *D_{FK}* aufweist,
wobei der Leiterplattengrundkörper (39) eine Materialstärke *D_{GK}* aufweist,
wobei der Federkörper (41) einen Federkörperbereich (42) aufweist,
wobei zumindest im Federkörperbereich (42) gilt, dass *D_{FK} < D_{GK}.*

7. Messgerät nach mindestens einem der Ansprüche 1 bis 5,
wobei der Federkörper (41) eine Materialstärke *D_{FK}* aufweist,
wobei der Leiterplattengrundkörper (39) eine Materialstärke *D_{GK}* aufweist,
wobei die Materialstärke *D_{FK}* über den gesamten Federkörper (41) konstant ist,
wobei *D_{GK} = D_{FK}* gilt.

8. Messgerät nach Anspruch 6 oder 7,
wobei für die Materialstärke *D_{FK}* und/oder die Materialstärke *D_{GK}* gilt, dass diese größer als 0,5 Millimeter, insbesondere 0,8 Millimeter und bevorzugt 1 Millimeter ist.

9. Messgerät nach mindestens einem der Ansprüche 1 bis 8,
wobei die Leiterplatte (34) und die Leiterplattenkomponente (40) derart ausgebildet ist, dass auf die Leiterplattenkomponente (40), insbesondere auf den Federkörper (41) und bevorzugt auf die Kontaktfläche (43) eine Kraft in Richtung des Leiterplattengrundkörpers (39), insbesondere ein Biegemoment wirkt.

10. Messgerät nach einem der vorherigen Ansprüche,
wobei sich eine durch die Kontaktfläche (43) verlaufende Kontaktflächenebene und die durch die Anbringfläche (45) verlaufende Leiterplattenebene schneiden.

11. Messgerät nach einem der vorherigen Ansprüche,
wobei die Kontaktfläche (43) eine Metallschicht (44) aufweist.

12. Messgerät nach Anspruch 11,
wobei sich die Metallschicht (44) ausgehend von der Kontaktfläche (43) zumindest teilweise bis zu der Anbringfläche (45) erstreckt,
wobei der erste Temperatursensor (101) mindestens teilweise auf der Metallschicht (44) angeordnet ist.

13. Messgerät nach Anspruch 11 und/oder 12,
wobei der erste Temperatursensor (101) zumindest über eine elektrischen Leiterbahn (103) mit einer Messschaltung (33) elektrisch verbunden ist,
wobei sich die Metallschicht (44) zumindest teilweise auf die Leiterbahn (103) erstreckt.

14. Messgerät nach mindestens einem der vorhergehenden Ansprüche,
wobei der Gehäusekörper (3) einen ersten Gehäuseabschnitt (46) und einen zweiten Gehäuseabschnitt (47) aufweist,
wobei der Gehäusekörper (3) in dem ersten Gehäuseabschnitt (46) eines ersten Gehäusekörperdurchmesser aufweist,
wobei der Gehäusekörper (3) in dem zweiten Gehäuseabschnitt (47) einen zweiten Gehäusekörperdurchmesser aufweist,
wobei der erste Gehäuseabschnitt (46) und der zweite Gehäuseabschnitt (47) in Längsrichtung des Gehäusekörpers (3) aufeinanderfolgen,
wobei der erste Gehäusekörperdurchmesser kleiner ist als der zweite Gehäusekörperdurchmesser,
wobei der Federkörper (41) zumindest teilweise die Innenfläche (9) des Gehäusekörpers (3) im ersten Gehäuseabschnitt (46) berührt.

15. Messgerät nach mindestens einem vorhergehenden Ansprüche,
wobei die Leiterplatte (34) mit Elektronikbauteilen (48) bestückt ist,
wobei der Federkörper (41) einen Federkörperbereich (42) aufweist,
wobei die Elektronikbauteile (48) insbesondere ausschließlich außerhalb des Federkörperbereiches (42) angeordnet sind.

16. Messgerät nach Anspruch 15, umfassend:
- eine Messvorrichtung,
wobei die Messvorrichtung eine Kontaktierungsvorrichtung (50) aufweist,
wobei die Kontaktierungsvorrichtung (50) eine erste Kontaktierungskomponente (51) und eine zweite Kontaktierungskomponente (52) aufweist,
wobei die erste Kontaktierungskomponente (51) komplementär zur ersten Kontaktierungskomponente (52) ausgebildet ist,
wobei die erste Kontaktierungskomponente (51) auf der Leiterplatte (34) angeordnet ist;
- eine Messschaltung (33),
wobei die Messschaltung (33) durch die Elektronikbauteile (48) gebildet ist,
wobei die Messschaltung (33) auf der Leiterplatte (34) angeordnet ist,
wobei die Messschaltung (33) über die Kontaktierungsvorrichtung (50) mit der Messvorrichtung elektrisch verbunden ist.

17. Messgerät nach Anspruch 16,
wobei die Messvorrichtung eine Vorrichtung (5) zum Erzeugen eines Magnetfeldes umfasst,
wobei die Vorrichtung zum Erzeugen des Magnetfeldes im Gehäuse (2), insbesondere koaxial zu einer Gehäusekörperachse angeordnet ist,
wobei die Leiterplatte (34) mindestens einen Leiterplattenschenkel (37) aufweist,
wobei sich der mindestens eine Leiterplattenschenkel (37) zwischen der Vorrichtung (5) zum Erzeugen des Magnetfeldes und der Innenfläche (9) erstreckt,
wobei die erste Kontaktierungskomponente (51) auf dem mindestens einen Leiterplattenschenkel (37) angeordnet ist,
wobei das Messvorrichtung eine Vorrichtung (17) zum Abgreifen einer induzierten Messspannung in einem fließfähigen Medium umfasst,
wobei eine Betriebsschaltung (7) auf der Leiterplatte (34) angeordnet ist,
wobei die Betriebsschaltung (7) mit der Vorrichtung (5) zum Erzeugen des Magnetfeldes elektrisch verbunden ist,
wobei die Betriebsschaltung (7) durch die Elektronikbauteile (48) gebildet ist.
- eine Messschaltung (33),
wobei die Messschaltung (33) über die Kontaktiervorrichtung (50) mit der Vorrichtung (17) zum Abgreifen der induzierten Messspannung elektrisch verbunden ist,
wobei die Messschaltung (33) durch die Elektronikbauteile (48) gebildet ist.

18. Messgerät nach mindestens einem der vorhergehenden Ansprüche,
wobei die Leiterplatte nicht als Starr-Flex Leiterplatte, nicht als Semi-Flex Leiterplatte und nicht als Flex-Leiterplatte ausgebildet ist.

## Claims

1. Measuring device for determining a process variable of a medium, comprising:
- a housing (2),
wherein the housing (2) comprises a housing body (3), in particular a metallic housing body,
wherein the housing body (3) has an inner surface (9);
- a temperature measuring device,
wherein the temperature measuring device comprises a first temperature sensor (101),
wherein the first temperature sensor (101) is set up to determine a first temperature value,
wherein the temperature measuring device comprises an evaluation circuit (18),
wherein the evaluation circuit (18) is set up to determine a medium temperature as a function of the first temperature value;
- a rigid printed circuit board (34),
wherein the printed circuit board (34) has a resiliently formed printed circuit board component (40),
wherein the first temperature sensor (101) is arranged on the printed circuit board component (40),
wherein the printed circuit board component (40) at least partially touches the inner surface (9) of the housing body (3) .
wherein the printed circuit board component (40) has a spring body (41),
wherein the printed circuit board (34) has a rigid printed circuit board base body (39),
wherein the spring body (41) and the circuit board base body (39) are formed monolithically ,
wherein the spring body (41) protrudes at least partially from the circuit board base body (39),
wherein the spring body (41) has a contact surface (43),
wherein the spring body (41) has an attachment surface (45),
wherein the first temperature sensor (101) is arranged on the mounting surface (45),
**characterized in that** the spring body (41) touches the inner surface (9) with the contact surface (43) .

2. Measuring device according to claim 1,
wherein the spring body (41) is elastically deformable, in particular deformed, at least in one plane of the printed circuit board.

3. Measuring device according to at least one of claims 1 to 2,
wherein the spring body (41) has an extension with a length*L* in the longitudinal direction of the spring body (41),
whereby the lengthL assumes a value between 5 and 20 millimeters.

4. Measuring device according to claim 3,
whereby the length*L* assumes a value between 5 and 15 millimeters, in particular between 7 and 13 millimeters and preferably between 9 and 11 millimeters

5. Measuring device according to claim 3,
whereby the lengthL assumes a value between 10 and 20 millimeters, in particular between 12 and 18 millimeters and preferably between 14 and 16 millimeters

6. Measuring device according to at least one of the preceding claims,
wherein the spring body (41) has a material thickness*D_{FK}* ,
wherein the printed circuit board base body (39) has a material thickness*D_{GK}* ,
wherein the spring body (41) has a spring body region (42),
wherein, at least in the spring body region (42), *.D_{FK} < D_{GK}*

7. Measuring device according to at least one of claims 1 to 5,
wherein the spring body (41) has a material thickness*D_{FK}* ,
wherein the printed circuit board base body (39) has a material thickness*D_{GK}* ,
whereby the material thickness*D_{FK}* is constant over the entire spring body (41),
where*D_{GK} = D_{FK}* applies.

8. Measuring device according to claim 6 or 7,
whereby the material thickness*D_{FK}* and/or the material thickness*D_{GK}* is greater than 0.5 millimeters, in particular 0.8 millimeters and preferably 1 millimeter.

9. Measuring device according to at least one of claims 1 to 8,
the printed circuit board (34) and the printed circuit board component (40) being designed in such a way that a force, in particular a bending moment, acts on the printed circuit board component (40), in particular on the spring body (41) and preferably on the contact surface (43), in the direction of the printed circuit board base body (39).

10. Measuring device according to any one of the preceding claims,
wherein a contact surface plane extending through the contact surface (43) and the printed circuit board plane extending through the mounting surface (45) intersect.

11. Measuring device according to any one of the preceding claims,
wherein the contact surface (43) has a metal layer (44).

12. Measuring device according to claim 11,
wherein the metal layer (44) extends at least partially from the contact surface (43) to the attachment surface (45),
wherein the first temperature sensor (101) is arranged at least partially on the metal layer (44).

13. Measuring device according to claim 11 and/or 12,
wherein the first temperature sensor (101) is electrically connected to a measuring circuit (33) at least via an electrical conductor path (103),
wherein the metal layer (44) extends at least partially onto the conductor track (103).

14. Measuring device according to at least one of the preceding claims,
wherein the housing body (3) has a first housing section (46) and a second housing section (47),
wherein the housing body (3) has a first housing body diameter in the first housing section (46),
wherein the housing body (3) has a second housing body diameter in the second housing section (47),
wherein the first housing section (46) and the second housing section (47) follow one another in the longitudinal direction of the housing body (3),
where the first housing body diameter is smaller than the second housing body diameter,
wherein the spring body (41) at least partially contacts the inner surface (9) of the housing body (3) in the first housing section (46).

15. Measuring device according to at least one of the preceding claims,
wherein the printed circuit board (34) is fitted with electronic components (48),
wherein the spring body (41) has a spring body region (42)
wherein the electronic components (48) are arranged in particular exclusively outside the spring body region (42).

16. Measuring device according to claim 15, comprising:
- a measuring device,
wherein the measuring device has a contacting device (50),
wherein the contacting device (50) comprises a first contacting component (51) and a second contacting component (52),
wherein the first contacting component (51) is complementary to the first contacting component (52),
wherein the first contacting component (51) is arranged on the printed circuit board (34);
- a measuring circuit (33),
wherein the measuring circuit (33) is formed by the electronic components (48),
wherein the measuring circuit (33) is arranged on the printed circuit board (34),
wherein the measuring circuit (33) is electrically connected to the measuring device via the contacting device (50).

17. Measuring device according to claim 16,
wherein the measuring device comprises a device (5) for generating a magnetic field,
wherein the device for generating the magnetic field is arranged in the housing (2), in particular coaxially to a housing body axis,
wherein the printed circuit board (34) has at least one printed circuit board leg (37),
wherein the at least one circuit board leg (37) extends between the device (5) for generating the magnetic field and the inner surface (9),
wherein the first contacting component (51) is arranged on the at least one printed circuit board leg (37),
wherein the measuring device comprises a device (17) for tapping an induced measuring voltage in a flowable medium,
wherein an operating circuit (7) is arranged on the printed circuit board (34),
wherein the operating circuit (7) is electrically connected to the device (5) for generating the magnetic field,
wherein the operating circuit (7) is formed by the electronic components (48) .
- a measuring circuit (33),
wherein the measuring circuit (33) is electrically connected via the contacting device (50) to the device (17) for tapping the induced measuring voltage,
wherein the measuring circuit (33) is formed by the electronic components (48).

18. Measuring device according to at least one of the preceding claims,
whereby the printed circuit board is not designed as a rigid-flex printed circuit board, not as a semi-flex printed circuit board and not as a flex printed circuit board.

## Revendications

1. Appareil de mesure pour déterminer une grandeur de processus d'un milieu, comprenant :
- un boîtier (2),
le boîtier (2) comprenant un corps de boîtier (3), en particulier métallique,
le corps de boîtier (3) présentant une surface intérieure (9) ;
- un dispositif de mesure de la température,
dans lequel le dispositif de mesure de la température comprend un premier capteur de température (101),
dans lequel le premier capteur de température (101) est adapté pour déterminer une première valeur de température,
le dispositif de mesure de la température comprenant un circuit d'évaluation (18),
le circuit d'évaluation (18) étant conçu pour déterminer une température du milieu en fonction de la première valeur de température ;
- un circuit imprimé rigide (34),
dans lequel la carte de circuit imprimé (34) comprend un composant de carte de circuit imprimé (40) formé de manière élastique,
dans lequel le premier capteur de température (101) est disposé sur le composant de carte de circuit imprimé (40),
où le composant de carte de circuit imprimé (40) touche au moins partiellement la surface intérieure (9) du corps de boîtier (3) .
dans lequel le composant de carte de circuit imprimé (40) comprend un corps élastique (41),
dans lequel la carte de circuit imprimé (34) comprend un corps de base de carte de circuit imprimé rigide (39),
le corps élastique (41) et le corps de base (39) de la carte de circuit imprimé étant réalisés de manière monolithique ,
dans lequel le corps élastique (41) fait saillie au moins partiellement depuis le corps de base (39) de la carte de circuit imprimé,
dans lequel le corps élastique (41) présente une surface de contact (43),
dans lequel le corps de ressort (41) comprend une surface de fixation (45),
dans lequel le premier capteur de température (101) est disposé sur la surface de montage (45),
**caractérisé en ce que** le corps élastique (41) touche la surface intérieure (9) avec la surface de contact (43) .

2. Appareil de mesure selon la revendication 1,
le corps élastique (41) étant déformable élastiquement, en particulier déformé, au moins dans un plan de la carte de circuit imprimé.

3. Appareil de mesure selon au moins l'une des revendications 1 à 2,
dans lequel le corps élastique (41) présente, dans la direction longitudinale du corps élastique (41), une extension ayant une longueur*L* ,
où la longueurL prend une valeur comprise entre 5 et 20 millimètres.

4. Appareil de mesure selon la revendication 3,
la longueurL prenant une valeur comprise entre 5 et 15 millimètres, en particulier entre 7 et 13 millimètres et de préférence entre 9 et 11 millimètres

5. Appareil de mesure selon la revendication 3,
la longueurL prenant une valeur comprise entre 10 et 20 millimètres, en particulier entre 12 et 18 millimètres et de préférence entre 14 et 16 millimètres

6. Appareil de mesure selon au moins l'une des revendications précédentes,
le corps élastique (41) présentant une épaisseur de matériau*D_{FK}* ,
dans lequel le corps de base de la carte de circuit imprimé (39) présente une épaisseur de matériau*D*_{GK} ,
dans lequel le corps de ressort (41) comprend une partie de corps de ressort (42),
étant entendu qu'au moins dans la zone du corps élastique *(42),D_{FK} < D_{GK} .*

7. Appareil de mesure selon au moins l'une des revendications 1 à 5,
le corps élastique (41) présentant une épaisseur de matériau*D_{FK}* ,
dans lequel le corps de base de la carte de circuit imprimé (39) présente une épaisseur de matériau*D*_{*G*K} ,
l'épaisseur du matériau*D_{FK}* étant constante sur l'ensemble du corps élastique (41),
où *D_{GK} = D_{FK}* est valable.

8. Appareil de mesure selon la revendication 6 ou 7,
l'épaisseur de matériau*D_{FK}* et/ou l'épaisseur de matériau*D_{GK}* étant supérieure à 0,5 millimètre, en particulier à 0,8 millimètre et de préférence à 1 millimètre.

9. Appareil de mesure selon au moins l'une des revendications 1 à 8,
la carte de circuit imprimé (34) et le composant de carte de circuit imprimé (40) étant conçus de telle sorte qu'une force en direction du corps de base de carte de circuit imprimé (39), en particulier un moment de flexion, agit sur le composant de carte de circuit imprimé (40), en particulier sur le corps élastique (41) et de préférence sur la surface de contact (43).

10. Appareil de mesure selon l'une quelconque des revendications précédentes,
dans lequel un plan de surface de contact s'étendant à travers la surface de contact (43) et le plan de carte de circuit imprimé s'étendant à travers la surface de montage (45) se coupent.

11. Appareil de mesure selon l'une quelconque des revendications précédentes, dans lequel la surface de contact (43) comprend une couche métallique (44).

12. Appareil de mesure selon la revendication 11,
dans lequel la couche métallique (44) s'étend depuis la surface de contact (43) au moins partiellement jusqu'à la surface de fixation (45),
dans lequel le premier capteur de température (101) est disposé au moins partiellement sur la couche métallique (44).

13. Appareil de mesure selon la revendication 11 et/ou 12,
le premier capteur de température (101) étant relié électriquement à un circuit de mesure (33) au moins par l'intermédiaire d'une piste conductrice électrique (103),
dans lequel la couche métallique (44) s'étend au moins partiellement sur la piste conductrice (103).

14. Appareil de mesure selon au moins l'une des revendications précédentes,
dans lequel le corps de boîtier (3) comprend une première partie de boîtier (46) et une seconde partie de boîtier (47),
dans lequel le corps de boîtier (3) présente un premier diamètre de corps de boîtier dans la première partie de boîtier (46),
dans lequel le corps de boîtier (3) présente un deuxième diamètre de corps de boîtier dans la deuxième section de boîtier (47),
dans lequel la première section de boîtier (46) et la deuxième section de boîtier (47) se succèdent dans la direction longitudinale du corps de boîtier (3),
le premier diamètre du corps de boîtier étant inférieur au deuxième diamètre du corps de boîtier,
le corps élastique (41) étant au moins partiellement en contact avec la surface intérieure (9) du corps de boîtier (3) dans la première section de boîtier (46).

15. Appareil de mesure selon au moins l'une des revendications précédentes,
la carte de circuit imprimé (34) étant équipée de composants électroniques (48),
dans lequel le corps de ressort (41) comprend une partie de corps de ressort (42)
les composants électroniques (48) étant notamment disposés exclusivement à l'extérieur de la zone du corps élastique (42).

16. Appareil de mesure selon la revendication 15, comprenant :
- un dispositif de mesure,
dans lequel le dispositif de mesure comprend un dispositif de mise en contact (50),
dans lequel le dispositif de mise en contact (50) comprend un premier composant de mise en contact (51) et un second composant de mise en contact (52),
le premier composant de mise en contact (51) étant complémentaire du premier composant de mise en contact (52),
dans lequel le premier composant de contact (51) est disposé sur la carte de circuit imprimé (34) ;
- un circuit de mesure (33),
dans lequel le circuit de mesure (33) est formé par les composants électroniques (48),
le circuit de mesure (33) étant disposé sur la carte de circuit imprimé (34),
dans lequel le circuit de mesure (33) est connecté électriquement au dispositif de mesure par l'intermédiaire du dispositif de mise en contact (50).

17. Appareil de mesure selon la revendication 16,
dans lequel le dispositif de mesure comprend un dispositif (5) pour générer un champ magnétique,
le dispositif de génération du champ magnétique étant disposé dans le boîtier (2), en particulier coaxialement à un axe du corps du boîtier,
dans lequel la carte de circuit imprimé (34) comprend au moins une branche de carte de circuit imprimé (37),
dans lequel la au moins une branche de carte de circuit imprimé (37) s'étend entre le dispositif (5) pour générer le champ magnétique et la surface intérieure (9),
dans lequel le premier composant de contact (51) est disposé sur la au moins une branche de carte de circuit imprimé (37),
dans lequel le dispositif de mesure comprend un dispositif (17) pour prélever une tension de mesure induite dans un milieu fluide,
dans lequel un circuit de fonctionnement (7) est disposé sur la carte de circuit imprimé (34),
dans lequel le circuit de fonctionnement (7) est connecté électriquement au dispositif (5) pour générer le champ magnétique,
le circuit de fonctionnement (7) étant formé par les composants électroniques (48) .
- un circuit de mesure (33),
le circuit de mesure (33) étant relié électriquement au dispositif (17) pour prélever la tension de mesure induite par l'intermédiaire du dispositif de contact (50),
dans lequel le circuit de mesure (33) est formé par les composants électroniques (48).

18. Appareil de mesure selon au moins l'une des revendications précédentes,
dans lequel le circuit imprimé n'est pas un circuit imprimé flex-rigide, ni un circuit imprimé semi-flexible, ni un circuit imprimé flexible.
